**Europäisches Patentamt**

**European Patent Office**

**Office européen des brevets**

(11) Veröffentlichungsnummer: **0 101 073**
**B1**

(12) **EUROPÄISCHE PATENTSCHRIFT**

(45) Veröffentlichungstag der Patentschrift:
16.03.88

(21) Anmeldenummer: **83107928.0**

(22) Anmeldetag: **11.08.83**

(51) Int. Cl.⁴: **B 60 N 1/06**

(54) Kraftfahrzeug mit einer umklappbaren Rücksitzbank und einstellbaren Kopfstützen.

(30) Priorität: **12.08.82 DE 3229983**

(43) Veröffentlichungstag der Anmeldung:
**22.02.84 Patentblatt 84/8**

(45) Bekanntmachung des Hinweises auf die Patenterteilung:
**16.03.88 Patentblatt 88/11**

(84) Benannte Vertragsstaaten:
**DE FR GB IT SE**

(56) Entgegenhaltungen:
**DE-A-686 744**
**DE-A-2 113 579**
**DE-A-2 358 231**
**DE-A-2 358 233**
**DE-A-3 103 620**
**DE-B-2 808 381**
**DE-U-7 129 721**
**FR-A-1 226 624**
**GB-A-2 069 328**
**US-A-3 029 107**
**US-A-3 170 725**
**US-A-3 180 683**
**US-A-3 186 763**

**Prospekt "Triumph Acclaim" Genfer Autosalon,
10.5.1982**

(73) Patentinhaber: **AUDI AG, Postfach 220, D-8070
Ingolstadt (DE)**

(72) Erfinder: **Stock, Arthur, Ing.- grad.,
Rathgeberstrasse 3, D-8070 Ingolstadt (DE)**

(74) Vertreter: **Le Vrang, Klaus, AUDI AG Postfach 220
Patentabteilung I/EQP, D-8070 Ingolstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf ein Kraftfahrzeug, insbesondere Personenkraftwagen oder Kombi, mit einer eine verstellbare Rückenlehne aufweisenden Rücksitzbank und einem sich etwa in Höhe der Oberkante der Rückenlehne über die gesamte Breite des Innenraumes erstreckenden Halteteil, an welchem sich die Rückenlehne abstützt und an welchem wengistens eine verstellbare Kopfstütze aufgenommen ist.

Eine derartige Ausbildung ist aus der US-A-3 170 725 bekannt. Die Rückenlehne der Rücksitzbank ist dabei so ausgeführt, daß ihre Neigung in einem kleinen Winkelbereich verstellbar ist. Im Bereich der Oberkante der Rückenlehne schließt sich nach hinten ein Ablagebrett an, an dem der Verstellmechanismus für die Rückenlehne angeordnet ist. Das Ablagebrett nimmt auch Kopfstützen auf, welche aus einer Nichtgebrauchsstellung in einer Aussparung des Ablagebrettes um etwa 180° nach vorne in ihrer Gebrauchsstellung verschwenkbar sind. Diesen Kopfstützen kommt an sich nur die Funktion eines Ruhekissens zu, da sie nicht geeignet sind, das Verletzungsrsisiko bei einem Unfall zu reduzieren. Eine Kopfstütze soll vornehmlich bei einem Heckaufprall wirksam werden. In diesem Fall klappt jedoch die Kopfstütze selbsttätig um, ohne daß sie den Kopf des Sitzbenutzers abstützen könnte.

Aus der DE-A-686 744 ist ein Personenkraftwagen mit einer Rücksitzbank bekannt, deren Rückenlehne sich zur Schaffung einer Durchlademöglichkeit von einem sich an die Rückenlehne nach hinten anschließenden Gepäckraum in den Innenraum über ihre gesamte Höhe umklappen läßt. In der Gebrauchsstellung stützt sich die Rückenlehne auf jeder Seite an einer sich in Fahrtrichtung erstreckenden Rahmenstange ab und ist mit dieser durch Federriegel lösbar verbunden. Kopfstützen für die Benutzer der Rücksitzbank sind nicht vorgesehen.

Aus der DE-A-23 58 233 ist schließlich ein Fahrzeug, insbesondere ein Lieferwagen, bekannt, welcher ebenfalls mit einer Rücksitzbank ausgerüstet ist. Die Rückenlehne der Rücksitzbank läßt sich zur Schaffung einer Durchlademöglichkeit vom Gepäckraum in den Innenraum über ihre gesamte Höhe umklappen. Der Rücksitzbank sind auch Kopfstützen zugeordnet, welche an einem Aufsatz über dem Gepäckraum befestigt sind. Dieser Aufsatz erstreckt sich nicht über die gesamte Breite des Innenraumes, sondern ist zwischen zwei im Abstand von den Fahrzeugseitenwänden angeordneten Zwischenwänden befestigt. An diesen Zwischenwänden wird auch die Rückenlehne in ihrer Gebrauchsposition abgestützt.

Der Erfindung liegt die Aufgabe zugrunde, ein Fahrzeug mit einer eine verstellbare Rückenlehne aufnehmenden Rücksitzbank und dieser zugeordnete Kopfstützen so auszubilden, daß die Lage der Kopfstützen beim Umklappen der Rückenlehne nicht verändert werden muß und eine einfache und stabile Befestigung der Kopfstützen gewährleistet ist.

Die Aufgabe wird durch die kennzeichnenden Merkmale des Anspruchs 1 gelöst.

Durch die Anordnung eines Querträgers etwa in Höhe der Oberkante der Rückenlehne und die Anordnung der Kopfstützen an diesem Querträger stellt sicher, daß das Umklappen der Rückenlehne unbeeinflußt von den Kopfstützen erfolgen kann. Werden die Kopfstützen nämlich - wie etwa in der DE-A-31 03 620 auf der Rückenlehne angeordnet, so ist es aufgrund der gegebenen Platzverhältnisse oft nicht möglich, die Rückenlehne mit den aufgesetzten Kopfstützen in die gewünschte horizontale Lage zu bewegen, da die Kopfstützen an den Vordersitzen anstoßen. In der genannten Druckschrift wird deshalb vorgeschlagen, die Kopfstützen derart auszubilden, daß sie auf die Lehnenvorderseite geschwenkt werden können und damit beim Umklappen bzw. bei umgeklappter Rückenlehne nicht störend im Wege sind.

Die Anordnung der Kopfstützen an dem Querträger stellt außerdem sicher, daß die Kopfstützen mit einfachen Mitteln befestigt werden können und auf die Kopfstützen einwirkende Kräfte unmittelbar in die Karosserie eingeleitet werden. Die Rückenlehne selbst wird dadurch nicht belastet, so daß sie insgesamt schwächer ausgeführt sein kann.

Der Querträger bildet gleichzeitig eine stabile Anlage für die Rückenlehne und versteift die Karosserie in Querrichtung, was aufgrund der entfallenden Rückwand von besonderer Bedeutung ist. Neben der Aufnahme der Kopfstützen kann der Querträger auch zur Unterbringung von Aufwickelvorrichtungen für Sicherheitsgurte ausgebildet sein. Der Gegenstand der Erfindung kommt besonders dann zum Tragen, wenn die erfindungsgemäße Anordnung bei Fahrzeugen mit einem Stufenheck eingesetzt wird, da dort der Querträger die Durchladehöhe nicht beeinträchtigt.

Obwohl es bereits seit sehr langer Zeit Fahrzeuge mit umklappbaren Rücksitzlehnen gibt wird durch die Erfindung erstmals vorgeschlagen, zur Abstützung der Rückenlehne in ihrer Gebrauchsposition einen sich über die gesamte Breite des Fahrzeuginnenraumes erstreckenden Querträger vorzusehen, der die Fahrzeugkarosserie in Querrichtung in gleicher Weise versteift wie die bisher bekannte Querwand, jedoch ein Durchladen vom Gepäckraum in den Innenraum bei vorgeklappter Rücksitzlehne zuläßt und gleichzeitig eine stationäre Anbringung der Kopfstützen für die Rücksitze ermöglicht.

Besonders vorteilhaft ist, wenn die Befestigungsstangen der Kopfstütze in einer waagerechten oder leicht geneigten Stellung im Querträger aufgenommen sind. Dadurch wird eine Abstützung auf breiter Basis gewährleistet und vor allem sichergestellt, daß die Durchladeöffnung nicht durch Einragen der Befestigungsstangen der Kopfstütze beeinträchtigt wird.

Es ist weiter von Vorteil, wenn zur Ermöglichung einer Längsverstellung der Kopfstütze die Befestigungsstangen im Querträger in verschiedenen Positionen arretierbar sind. Bei bekannten Kopfstützenbefestigungen, deren Befestigungsstangen meist in Richtung der Rückenlehne verlaufen, ist eine echte Längsverstellung nicht möglich. Es wird zwar versucht, durch Kippen der Kopfstütze um eine horizontale Achse eine Anpassung in Längsrichtung zu schaffen; jedoch ist dies nur in sehr geringem Maße möglich und wird mit dem Nachteil erkauft, daß die Lage der Kopfstütze relativ zum Kopf des Benutzers verändert wird. Bei der möglichen Längsverstellung gemäß der erfindungsgemäßen Anordnung bleibt die Kopfstütze unabhängig von der gewählten Längseinstellung stets in der gleichen Lage relativ zum Kopf des Benutzers. Eine Höhen- und/oder eine Neigungseinstellung der Kopfstütze kann in bekannter Weise zusätzlich vorgesehen sein.

Ein Ausführungsbeispiel der Erfindung ist in der Zeichnung dargestellt und wird nachfolgend näher beschrieben. Es zeigt

Fig. 1 eine umklappbare Rücksitzbank sowie eine Kopfstütze im Schnitt,

Fig. 2 eine Befestigungsstange der Kopfstütze aus Fig. 1 als Einzelteil und

Fig. 3 den Schnitt entlang der Linie III-III in Fig. 2.

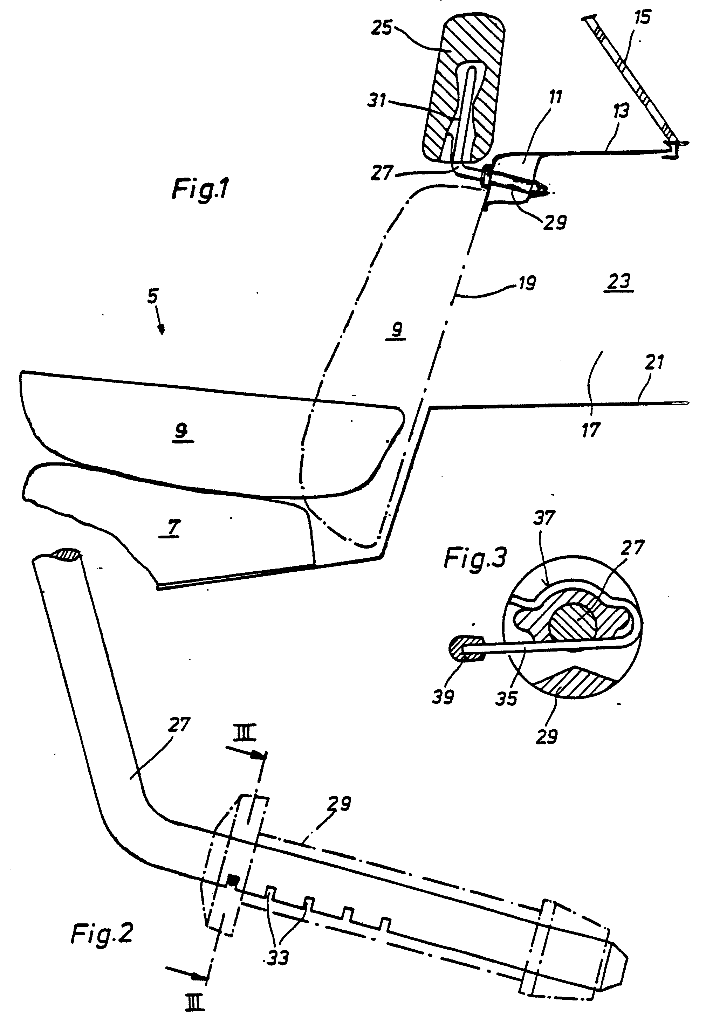

Fig. 1 zeigt eine Rücksitzbank 5, bestehend aus einem Sitzteil 7 und einer Rückenlehne 9, welche zur Bildung einer vergrößerten Ladefläche nach vorne geklappt wurde. Die Stellung der Rückenlehne 9 in Gebrauchsposition ist strichpunktiert dargestellt.

In Höhe der Oberkante der Rückenlehne 9 erstreckt sich über die gesamte Breite des Innenraumes ein Querträger 11, dessen oberes Blech nach hinten weitergeführt ist und eine Hutablage 13 bildet. An die Hutablage 13 schließt sich in bekannter Weise eine Heckscheibe 15 an. Unter der Hutablage 13 erstreckt sich ein Gepäckraum 17. Zur Vergrößerung des Gepäckraumes 17 ist eine Durchladeöffnung 19 vorgesehen, welche durch den Boden 21 des Gepäckraumes, den Querträger 11 sowie durch zwei Seitenwände 23 begrenzt ist. Der Gepäckraum 17 ist durch eine nicht dargestellte Heckklappe zugänglich.

Der Querträger 11 versteift die Karosserie in Querrichtung und ist zur Aufnahme von Kopfstützen 25 ausgebildet. Jede Kopfstütze 25 umfaßt zwei Befestigungsstangen 27, die in leicht schräg nach hinten verlaufenden Hülsen 29 arretiert sind. Desweiteren ist jede Kopfstütze 25 mit einer bekannten und deshalb nicht näher dargestellten Höhen- und Neigungsverstellvorrichtung 31 ausgestattet.

Die Fig. 2 und 3 zeigen wie die Befestigungsstangen 27 in den zugeordneten Hülsen 29 geführt und arretiert sind. In den Befestigungsstangen 27 sind zu diesem Zweck Nuten 33 vorgesehen, in welche der Schenkel 35 einer an der Hülse 27 festgelegten Federklammer 37 eingreift. Wird der Schenkel 35 der Federklammer 37 durch Drücken (in der Zeichnung nach unten) auf den am Ende des Schenkels 35 aufgebrachten Griff 39 aus der Nut herausbewegt, dann läßt sich die Befestigungsstange 27 - und damit auch die Kopfstütze 25 - in Längsrichtung verschieben. Wird der Griff 39 losgelassen und die Befestigungsstange 27 weiter in Längsrichtung herausgezogen bzw. hingeschoben, dann rastet der Schenkel 35 der Federklammer 37 selbsttätig in die nächste Nut 33 ein und sichert dadurch die Kopfstütze. Da jede Kopfstütze 25 mit zwei Befestigungsstangen 27 ausgerüstet ist, versteht es sich von selbst, daß beim Verstellen gleichzeitig beide Arretiervorrichtungen zu lösen sind.

## Patentansprüche

1. Kraftfahrzeug, insbesondere Personenkraftwagen oder Kombi, mit einer eine verstellbare Rückenlehne (9) aufweisenden Rücksitzbank (5) und einem sich etwa in Höhe der Oberkante der Rückenlehne (9) über die gesamte Breite des Innenraumes erstreckenden Halteteil, an welchem sich die Rückenlehne (9) abstützt und an welchem wenigstens eine verstellbare Kopfstütze (25) aufgenommen ist, dadurch gekennzeichnet,
- daß die Rückenlehne (9) zur Schaffung einer Durchlademöglichkeit von einem sich an die Rückenlehne (9) nach hinten anschließenden Gepäckraum (17) in den Innenraum über ihre gesamte Höhe umklappbar ist,
- daß das Halteteil ein durch ein Winkel- oder Hohlprofil gebildeter Querträger (11) ist, an dem sich die Rückenlehne (9) in ihrer Gebrauchsposition abstützt und
- daß die Kopfstütze (25) durch Befestigungsstangen (27) am Querträger (11) befestigt ist.

2. Kraftfahrzeug nach Anspruch 1, dadurch gekennzeichnet, daß die Befestigungsstangen (27) in einer waagerechten oder leicht geneigten Stellung im Querträger (11) aufgenommen sind.

3. Kraftfahrzeug nach Anspruch 2, dadurch gekennzeichnet, daß zur Ermöglichung einer Längsverstellung der Kopfstütze (25) die Befestigungsstangen (27) im Querträger (11) in verschiedenen Positionen arretierbar sind.

## Claims

1. Motor vehicle, in particular a passenger car or station wagon, which has a rear seat (5) with an adjustable back rest (9) and a holding component which extends over the entire wide of the interior at about the level of the top edge of the back rest (9), on which the back rest (9) is supported, and which accommodates at least one adjustable head rest (25), <u>characterised</u>
- in that the back rest (9) can be folded down over its entire height to provide the possibility of loading through from a luggage space (17) behind the back rest (9) into the interior,
- in that the holding component is a crosspiece (11) formed by an angled or hollow profile, on which the back rest (9) is supported in its use position and
- in that the head rest (25) is fixed to the crosspiece (11) by fixing bars (27).

2. Motor vehicle according to claim 1, <u>characterised</u> in that the fixing bars (27) are accommodated in the crosspiece (11) in a horizontal or slightly inclined position.

3. Motor vehicle according to claim 2, <u>characterised</u> in that the fixing bars (27) can be arrested in the crosspiece (11) in various positions to allow longitudinal adjustment of the head rest (25).

## Revendications

1. Véhicule automobile, notamment une voiture de tourisme ou un véhicule combiné, comportant une banquette arrière (5) pourvue d'un dossier réglable (9) ainsi qu'une partie de maintien, s'étendant environ à la hauteur du bord supérieur du dossier (9) sur toute la largeur de l'habitacle, contre laquelle s'appuie le dossier (9) et sur laquelle est monté au moins un appui-tête réglable (25), caractérisé en ce que:
- le dossier (9) est rabattable sur toute sa hauteur dans l'habitacle du véhicule en vue de créer une possibilité supplémentaire de chargement à partir d'un coffre à bagages (17) disposé à la suite du dossier (9) vers l'arrière,
- la partie de maintien est une poutre transversale (11) constituée par une cornière ou un profilé creux et contre laquelle s'appuie le dossier (9) dans sa position de service, et
- l'appui-tête (25) est fixé sur la poutre transversale (11) par des tiges de fixation (27).

2. Véhicule automobile selon la revendication 1, caractérisé en ce que les tiges de fixation (27) sont reçues dans la poutre transversale (11) dans une position horizontale ou légèrement inclinée.

3. Véhicule automobile selon la revendication 2, caractérisé en ce que, pour permettre un réglage longitudinal de l'appui-tête (25), les tiges de fixation (27) peuvent être bloquées dans la poutre transversale (11) dans différentes positions.

0 101 073

Fig.1

Fig.3

Fig.2